# EUROPEAN PATENT SPECIFICATION

(11) **EP 3 129 295 B1**
(45) Date of publication and mention of the grant of the patent: **28.03.2018**
(21) Application number: 15720203.7
(22) Date of filing: 09.04.2015
(51) Int. Cl.: B65B 25/00, B65G 27/04, B65B 35/26, B65B 35/56, B65B 59/02, B65B 11/00

(54) **ADJUSTMENT ASSEMBLY FOR PACKAGING MACHINES AND THE LIKE**
EINSTELLUNGSANORDNUNG FÜR VERPACKUNGSMASCHINEN UND ÄHNLICHEM
ENSEMBLE D'AJUSTEMENT DE MACHINES D'EMBALLAGE

(30) Priority: 10.04.2014 IT BO20140208
(43) Date of publication of application: 15.02.2017
(73) Proprietor: CMFIMA S.R.L., 40026 Imola (BO) (IT)
(72) Inventor: FRABETTI, Fabio, I-40123 Bologna (IT); GIORGI, Giovanni, I-40033 Casalecchio Di Reno (IT); BARALDI, Luca, I-40133 Bologna (IT)
(74) Representative: Modiano, Micaela Nadia
(86) International application number: PCT/EP2015/057693
(87) International publication number: WO 2015/155276

(56) References cited:
- EP-A1- 0 801 014
- WO-A1-03/082675
- WO-A1-2007/091164
- GB-A- 2 277 507
- US-A- 2 415 997

## Description

The present invention relates to an adjustment assembly for packaging machines and the like; such assembly can be particularly indicated for the adjustment of machines for the individual packaging of small products.

Adjustment assemblies used for packaging machines are known e.g. from WO 2007/091164.

In particular the products can be candies, chocolates, pastries, chocolate shapes and the like, i.e. products that are delicate and easily subjected to deformations and wear when handled. The possibility is not excluded of also applying the present invention to machines intended for packaging products of a different nature.

The individual packaging of products consists of picking them up from a supply line and wrapping them with flaps of paper-like or polymeric material, or with sheets, generally multi-layer, provided with a thin layer of aluminum.

The packaging can occur by adopting substantially three different wrapping methods (from which a plurality of intermediate and derived solutions can be identified).

The wrapper can be folded on the product, according to predefined folding lines so that the overlapping flaps of the sheet are in turn made to fit together with one of the surfaces of the product which is contiguous thereto. This is a type of wrapping used for chocolates that are predominantly prismatic or more generally polyhedral in shape.

According to a further implementation, the wrapping can be done by wrapping the product and producing two twists with the sheet at the two opposite ends of the product.

This form of wrapping, which in the trade is known as "double twist" (and substantially shaped like a bonbon or Christmas cracker), is particularly indicated for products that are spherical, cylindrical, ellipsoid and the like.

A third type of wrapping comprises flaps superimposed and folded on one side, and a twist on the opposite side.

This third form of wrapping, which in the trade is known as "single twist", is particularly indicated for axially-symmetrical products provided with a substantially flat base.

The main problem suffered in conventional wrapping apparatuses, for the above mentioned products, is linked to the necessity of picking up the product from the supply line in order to be able to manipulate it, orienting it and covering it with the respective wrapper.

In fact the picking up transfers the product, which comes by translation from a supply line, onto a manipulation drum in which the product will follow a substantially circular path.

It is thus necessary that specific grip means, which are integral with the rotating drum, grip the product while it performs a translational motion on the supply line.

The delivery to the subsequent station, where the actual wrapping of each individual product will be carried out, must occur with an orientation of the product that is such as to allow the wrapping according to the desired mode.

In fact it is essential that the product be arranged in such a manner as to allow a correct juxtaposition of the wrapping sheet and a closing thereof by way of fixed and/or movable flaps.

Conventional operating units that pick up and orientate the product are specifically dedicated to a particular type of wrapper.

The machine with which they are associated is thus adapted to carry out only one type of wrapping: the high costs and this low versatility make this type of machine viable only for extremely large-scale producers and/or for companies that need to always package a single type of product in the same way.

The aim of the present invention is to solve the above mentioned drawbacks, by providing an adjustment assembly for packaging machines and the like which makes it possible to pick up a product from a supply line and deliver it to a processing station, giving it the correct orientation so that the processing station can carry out thereon the activity for which it is designed.

Within this aim, an object of the invention is to provide an adjustment assembly for packaging machines and the like which makes it possible to select the orientation with which the product is delivered to the processing station.

Another object of the invention is to provide an adjustment assembly for packaging machines and the like which makes it possible to increase the versatility of the machine in which it is installed.

Another object of the present invention is to provide an adjustment assembly for packaging machines and the like which is low cost, easily and practically implemented and safe in use.

This aim and these and other objects that will become better apparent hereinafter, are achieved by an adjustment assembly for packaging machines and the like, of the type comprising grip means for picking up one product at a time from a line for supplying queued products and for transferring to a respective processing station, characterized in that
- said grip means are rotatable and are functionally associated, for their orientation and for the orientation of the product retained by them, with at least one respective probe which can slide on at least one profiled cam that is substantially fixed, the translations of said at least one probe generating rotations of said grip means with consequent modification of the orientation of the product retained between them for correct delivery to the subsequent processing station,
- said at least one cam is integral with a fixed axis, the head of said axis being associated with a respective movement element for the controlled rotation of said axis according to at least two different arrangements, which correspond to different rotated configurations of said cams, with consequent different variation of the orientation of the product along the path, when said product is retained by said grip means after its clamping,
- said cams are mutually complementary, each cam having a contoured edge that defines, in contiguous sectors, different paths for said at least one probe, which correspond to different variations of the orientation of the product along the path after the pickup of each individual product from said supply line.

Further characteristics and advantages of the invention will become better apparent from the description of a preferred, but not exclusive, embodiment of the adjustment assembly for packaging machines according to the invention, which is illustrated by way of non-limiting example in the accompanying drawings wherein:
Figure 1 is a cross-sectional side view taken along a longitudinal vertical plane of a machine for packaging and the like, which is provided with an adjustment assembly according to the invention;

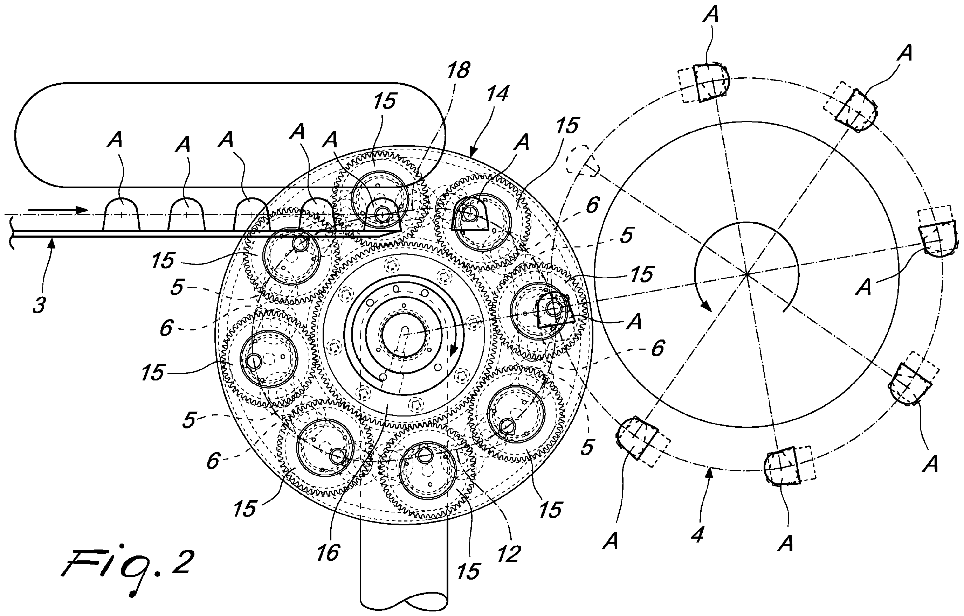

Figure 2 is a schematic front elevation view of a portion of a machine for packaging and the like, which is provided with an adjustment assembly according to the invention;

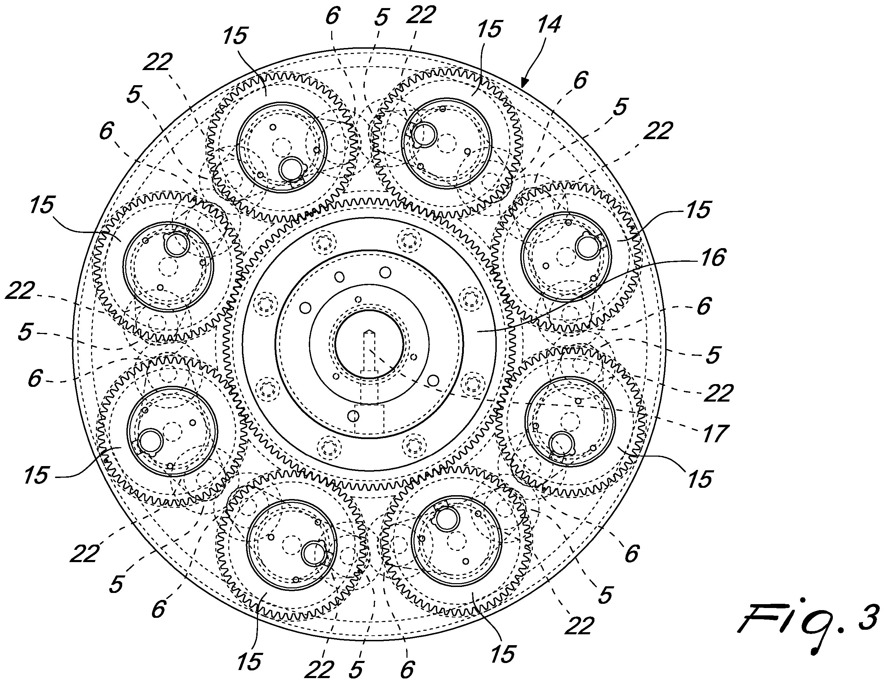

Figure 3 is a front elevation view of a detail of the portion of the machine in Figure 2;

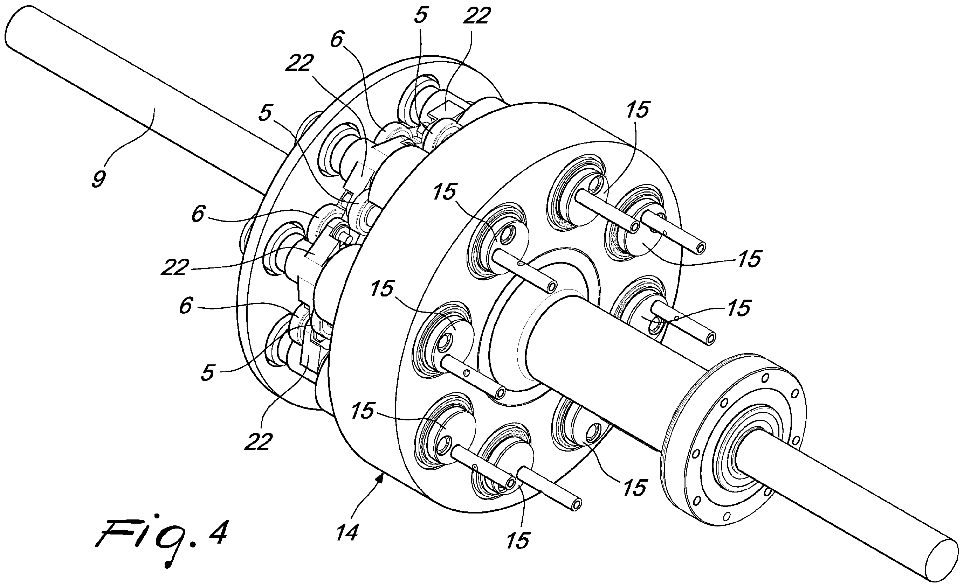

Figure 4 is a perspective view of a carousel associated with an adjustment assembly for packaging machines and the like according to the invention;

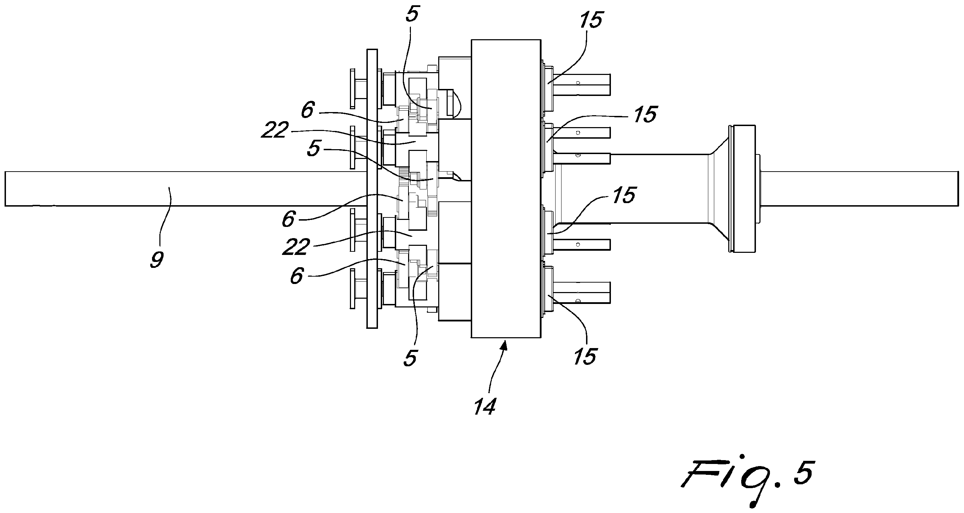

Figure 5 is a side view of the carousel in Figure 4.

With reference to the figures, the reference numeral 1 generally designates an adjustment assembly for packaging machines and the like.

It should be noted that the generic nature of the type of adjustment selected makes it possible to also apply the assembly 1 to machines intended for performing activities that are entirely different to packaging.

The adjustment assembly 1, for packaging machines and the like, comprises grip means 2 for picking up one product A at a time from a line 3 for supplying queued products A and for transferring to a respective processing station 4.

The grip means 2 are rotatable and functionally associated, in order to be capable of being effectively orientated according to the operating need of the subsequent station 4 (in particular the station 4 must receive the product A held by the means 2 according to a specific orientation that makes it possible to handle it correctly), with at least one respective probe 5 and 6 that can slide on at least one substantially fixed profiled cam 7 and 8.

According to the invention, the translations of the at least one probe 5 and 6 generate rotations of the grip means 2 with consequent modification of the orientation of the product A that is retained between them for correct delivery to the subsequent processing station 4.

In essence, the particular shape structure of the at least one cam 7 and 8 imposes a translation on the probe 5 and 6 which results in a rotation through a predefined angle of the grip means 2: this means that a product A taken from the line 3 with a specific spatial (geometric) orientation will be delivered to the station 4 rotated by such predefined angle in order to allow the correct operation of the station 4.

It should be noted that, according to a particular embodiment of undoubted applicative interest, the at least one cam 7 and 8 is integral with a fixed axis 9.

The head 10 of the axis 9 is associated with a respective movement element 11 for the controlled rotation of the axis 9 according to at least two different arrangements, which correspond to different rotated configurations of the cams 7 and 8, with consequent different variation of the orientation of the product A along a path 12, when the product A is retained by the grip means 2 after its clamping.

It should be noted that, during the operation of the machine for packaging and the like with which the assembly 1 is associated, the axis 9 is fixed (component usually static) and the cams 7 and 8 are also fixed with it.

The cams 7 and 8 are mutually complementary; each cam 7 and 8 is provided with a contoured edge which defines, in contiguous sectors, different paths for the at least one probe 5 and 6.

Such different paths correspond to different variations of the orientation of the product A along the path 12, after the picking up of each individual product A from the supply line 3.

It should further be noted that the cams 7 and 8 comprise a plurality of contiguous sectors of predefined angular extent.

Such sectors are provided with an edge with a contour that is curved according to a predefined rule of motion: the movement of the probe 5 and 6, along the respective edges of each sector, thus produce a different orientation of the product A upon delivery to the processing station 4.

According to the type of operations that are to be carried out by the station 4, and/or according to the different nature of the station 4 arranged downstream of the assembly 1, the operator can decide, simply by way of a rotation of the axis 9 (and with it of the cams 7 and 8), the orientation of the product A at the moment of delivery to the station 4.

Thus it can be seen that the assembly 1 is capable of conferring great versatility on the machine that comprises it, making it adapted to work with different processing stations 4 and/or with a processing station 4 that is capable of executing different operations that imply the reception of the product A with different orientations.

According to a specific embodiment of the present invention, the movement element 11 comprises at least one grip handle and at least one locking unit 13, for retaining the axis 9 according to a plurality of different configurations.

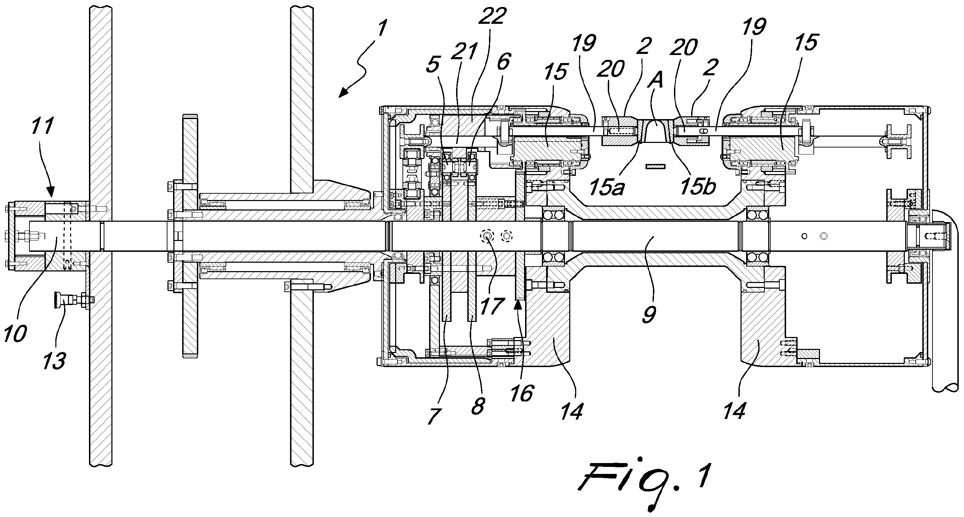

The locking unit 13, in a particularly simple version thereof (shown for the purposes of non-limiting example in Figure 1), can be constituted by a pin that is elastically forced on a plurality of contiguous seats of a fixed casing: retraction of the pin, by forcing the elastic means, allows the free rotation of the axis 9 with respect to the casing. Once such rotation is executed, the pin, by the action of the aforementioned elastic means, will be pushed anew into one of the seats of the casing (locking the axis 9 anew in such rotated configuration).

According to this embodiment, an operator, after disabling the locking unit 13, can act manually on the grip handle in order to rotate the axis 9 integrally with the at least one cam 7 and 8.

At the end of the rotation the probes 5 and 6 will be aligned (in their useful travel for picking up and transferring to the station 4) with a different sector of a respective cam 7 and 8.

According to an embodiment that is an alternative to the previous one and is completely automated, the adoption is not ruled out of a movement element 11 that comprises at least one actuator and at least one locking unit 13, for retaining the axis 9 according to a plurality of different configurations. In such case the actuator and the unit 13 will be controlled by a respective management and control unit for disabling the locking unit 13 (and freeing the rotation of the axis 9). The rotation of the axis 9, integrally with the at least one cam 7 and 8, will be imposed by the actuator for an angle of predefined extent. Thereafter the locking unit 13 is subsequently re-enabled, when rotation is completed.

In a possible application of the invention on a machine designed for packaging individual products A, it should be noted that such machine can preferably comprise a pair of mutually opposite carousels 14 that are coaxial and which rotate synchronously.

Each carousel 14 supports at least two grip means 2, which are distributed angularly along the carousel 14 and are aligned with corresponding grip means 2 of the other carousel 14.

The grip means 2 are articulated to a toothed planetary gear 15 that is accommodated in the carousel 14 and is rotatable on a fixed toothed sun gear 16 of the carousel 14.

The sun gear 16 is coupled rigidly to the axis 9 by way of an element 17 (of the type of a pin, a screw, a key and the like).

The grip means 2 are pivoted eccentrically on each planetary gear 15, defining a path 12 that has a portion 18 that is inclined and divergent with respect to the supply line 3.

The portion 18 is arranged downstream of the area for the clamping of the product A by the grip means 2.

It should be noted that the grip means 2 comprise a supporting shaft 19 for their first end 20 which is intended to clamp the product A.

The shaft 19 is translatable for the mutual approach and spacing apart of the ends 20 of mutually opposite and aligned means 2, with consequent clamping and releasing of the product A.

With particular reference to the embodiment illustrated previously, the shaft 19, substantially at its second end 21, which is opposite to the first end 20, will be effectively coupled to the at least one probe 5 and 6 that can slide along the at least one cam 7 and 8.

It should be noted that in reality the shaft 19 is constituted by two parallel and non-aligned rods, one of which is arranged axially with respect to the corresponding planetary gear 15, in particular this is the rod that is integral with the second end 21, and the other one is misaligned and eccentric with respect to the corresponding planetary gear 15 (the rod corresponding to the first end 20).

If the two rods were aligned and both coaxial with the axis of the corresponding planetary gear 15 they could define a single shaft 19 (made of a single piece), but in such case the grip means 2 would not move along the preset path 12.

The probes 5 and 6 are two in number, provided with an idle end roller intended to abut against the lateral edge of a respective contoured cam 7 and 8.

Each pair of probes 5 and 6 is coupled to a bracket 22 that is associated with a respective shaft 19 of a respective grip means 2.

Thanks to the presence of the bracket 22 the movement of the probes 5 and 6 will always be synchronous and no unwanted rotation beyond limit will occur (the one constitutes a stroke limit, a guide, for the other, thus ensuring that the bracket 22 moves according to a predefined law of motion and, with it, the corresponding grip means 2).

Advantageously the present invention solves the above mentioned problems, by providing an adjustment assembly 1 for packaging machines and the like which makes it possible to pick up a product A from a supply line and deliver it to a processing station 4, giving it the correct orientation so that the processing station 4 can carry out thereon the activity for which it is designed.

Conveniently the adjustment assembly 1 makes it possible to select the orientation with which the product A is delivered to the processing station 4.

Conveniently the adjustment assembly 1 thus makes it possible to increase the versatility of the machine in which it is installed.

Profitably, the assembly 1 is characterized by low cost and relatively simple practical implementation, a peculiarity that ensures its industrial application.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An adjustment assembly for packaging machines and the like, of the type comprising grip means (2) for picking up one product (A) at a time from a line (3) for supplying queued products (A) and for transferring to a respective processing station (4),
- said grip means (2) are rotatable and are functionally associated, for their orientation and for the orientation of the product (A) retained by them, with at least one respective probe (5, 6) which can slide on at least one profiled cam (7, 8) that is substantially fixed, the translations of said at least one probe (5, 6) generating rotations of said grip means (2) with consequent modification of the orientation of the product (A) retained between them for correct delivery to the subsequent processing station (4),
- said at least one cam (7, 8) is integral with a fixed axis (9), the head (10) of said axis (9) being associated with a respective movement element (11) for the controlled rotation of said axis (9) according to at least two different arrangements, which correspond to different rotated configurations of said cams (7, 8), with consequent different variation of the orientation of the product (A) along the path (12), when said product (A) is retained by said grip means (2) after its clamping, **characterized in that**
- said cams (7, 8) are mutually complementary, each cam (7, 8) having a contoured edge that defines, in contiguous sectors, different paths for said at least one probe (5, 6), which correspond to different variations of the orientation of the product (A) along the path (12) after the pickup of each individual product (A) from said supply line (3).

2. The adjustment assembly according to claim 1, **characterized in that** said cams (7, 8) comprise a plurality of contiguous sectors having a predefined angular extent, said sectors being provided with an edge with a contour that is curved according to a predefined rule of motion, the movement of said probe (5, 6) along the respective edges of each sector producing a different orientation of the product (A) upon delivery to said processing station (4).

3. The adjustment assembly according to claim 1, **characterized in that** said movement element (11) comprises at least one grip handle and at least one locking unit (13) for retaining the axis (9) according to a plurality of different configurations, an operator, after disabling said locking unit (13), by acting manually on said grip handle for the rotation of said axis (9) integrally with said at least one cam (7, 8), being able to arrange the axis (9) according to the rotated configuration of interest.

4. The adjustment assembly according to claim 1 or to claim 3, **characterized in that** said movement element (11) comprises at least one actuator and at least one locking unit (13), for retaining the axis (9) according to a plurality of different configurations, said actuator and said unit (13) being controlled by a respective control and management device for disabling said locking unit (13), for the rotation of said axis (9) integrally with said at least one cam (7, 8) and for the subsequent reenabling of said locking unit (13) when rotation is completed.

5. The adjustment assembly according to claim 1, **characterized in that** it comprises a pair of mutually opposite carousels (14) which are coaxial and rotate synchronously, each carousel (14) supporting at least two grip means (2), which are distributed angularly along said carousel (14) and are aligned with corresponding grip means (2) of the other carousel (14), said grip means (2) being articulated to a toothed planetary gear (15) that is accommodated in said carousel (14) and can rotate about a fixed toothed sun gear (16) of said carousel (14), said grip means (2) being pivoted eccentrically on each planetary gear (15), defining a path (12) that has a portion (18) that is inclined and divergent with respect to said supply line (3), said portion (18) being arranged downstream of the area for the clamping of said product (A) by said grip means (2).

6. The adjustment assembly according to claim 5, **characterized in that** said grip means (2) comprise a supporting shaft (19) for their first end (20) which is intended to clamp the product (A), said shaft (19) being translatable for the mutual approach and spacing apart of the ends (20) of mutually opposite and aligned means (2), with consequent clamping and releasing of the product (A).

7. The adjustment assembly according to claim 6, **characterized in that** said shaft (19), at its second end (21), which is opposite said first end (20), is coupled to the at least one said probe (5, 6) that can slide along said at least one cam (7, 8).

8. The adjustment assembly according to claim 7, **characterized in that** said probes (5, 6) are two in number and are provided with an idle end roller that is intended to abut against the lateral edge of a respective contoured cam (7, 8), each pair of probes (5, 6) being coupled to a bracket (22) that is associated with a respective shaft (19) of a respective grip means (2).

## Patentansprüche

1. Eine Einstellungsanordnung für Verpackungsmaschinen und Ähnliches, von der Art, die Greifmittel (2) umfasst, für die jeweilige Aufnahme eines Produkts (A) von einer Linie (3) zum Zuführen hintereinander angeordneter Produkt (A) und zum Überführen derselben an eine entsprechende Verarbeitungsstation (4),
- wobei die Greifmittel (2) drehbar sind und, zum Zwecke ihrer Ausrichtung und zur Ausrichtung des von ihnen gehaltenen Produkts (A), funktional mit mindestens einem entsprechenden Fühler (5, 6) verknüpft sind, der auf mindestens einem profilierten Nocken (7, 8) gleiten kann, der im Wesentlichen feststehend ist, wobei die Verschiebungen des mindestens einen Fühlers (5, 6) Drehungen der Greifmittel (2) mit daraus folgender Modifikation der Ausrichtung des Produkts (A) veranlassen, das zwischen ihnen gehalten wird, zur korrekten Übergabe an die nächste Verarbeitungsstation (4),
- wobei der mindestens eine Nocken (7, 8) integral mit einer festen Achse (9) ist, wobei der Knopf (10) der Achse (9) mit einem entsprechenden Bewegungselement (11) verknüpft ist, zur gesteuerten Drehung der Achse (9) entsprechend mindestens zwei verschiedenen Anordnungen, die verschiedenen gedrehten Konfigurationen der Nocken (7, 8) entsprechen, mit daraus folgender verschiedener Variation der Ausrichtung des Produkts (A) entlang dem Pfad (12), wenn das Produkt (A) nach seinem Klemmen von den Greifmitteln (2) gehalten wird,
**dadurch gekennzeichnet, dass**
- die Nocken (7, 8) zueinander komplementär sind, wobei jeder Nocken (7, 8) einen konturierten Rand hat, der in benachbarten Abschnitten verschiedene Pfade für den mindestens einen Fühler (5, 6) bestimmt, die verschiedenen Variationen der Ausrichtung des Produkts (A) entlang dem Pfad (12) nach der Aufnahme jedes einzelnen Produkts (A) von der Versorgungslinie (3) entsprechen.

2. Die Einstellungsanordnung gemäß Anspruch 1, **dadurch gekennzeichnet, dass** die Nocken (7, 8) eine Vielzahl von benachbarten Abschnitten mit vordefiniertem Winkelbereich umfassen, wobei die Abschnitte mit einem Rand mit einer Kontur versehen sind, der nach einer vordefinierten Bewegungsregel gekrümmt ist, wobei die Bewegung des Fühlers (5, 6) entlang den jeweiligen Rändern jedes Abschnitts eine andere Ausrichtung des Produkts (A) bei der Abgabe an die Verarbeitungsstation (4) herbeiführt.

3. Die Einstellungsanordnung gemäß Anspruch 1, **dadurch gekennzeichnet, dass** das Bewegungselement (11) mindestens einen Griff und mindestens eine Verriegelungseinheit (13) zum Halten der Achse (9) in einer Vielzahl verschiedener Konfigurationen umfasst, wodurch ein Bediener, nachdem er die Verriegelungseinheit (13) deaktiviert hat, durch manuelle Betätigung des Griffs zum Zwecke der Drehung der Achse (9) integral mit dem mindestens einen Nocken (7, 8), in der Lage ist, die Achse (9) entsprechend der gewünschten gedrehten Konfiguration anzuordnen.

4. Die Einstellungsanordnung gemäß Anspruch 1 oder Anspruch 3, **dadurch gekennzeichnet, dass** das Bewegungselement (11) mindestens ein Antriebselement und mindestens eine Verriegelungseinheit (13) zum Halten der Achse (9) in einer Vielzahl verschiedener Konfigurationen umfasst, wobei das Antriebselement und die Einheit (13) von einer entsprechenden Steuerungs- und Verwaltungsvorrichtung zum Desaktivieren der Verriegelungseinheit (13) gesteuert werden, zur Drehung der Achse (9) integral mit dem mindestens einen Nocken (7, 8) und zur anschließenden erneuten Aktivierung der Verriegelungseinheit (13), wenn die Drehung abgeschossen ist.

5. Die Einstellungsanordnung gemäß Anspruch 1, **dadurch gekennzeichnet, dass** sie ein Paar einander gegenüberliegender Karusselle (14) umfasst, die koaxial sind und sich synchron drehen, wobei jedes Karussell (14) mindestens zwei Greifmittel (2) trägt, welche winklig entlang dem Karussell (14) verteilt sind und mit entsprechenden Greifmitteln (2) des anderen Karussells (14) ausgerichtet sind, wobei die Greifmittel (2) gelenkig mit einem gezahnten Planetengetriebe (15) verbunden sind, das in dem Karussell (14) untergebracht ist und das sich um ein festes gezahntes Sonnenrad (16) des Karussells (14) drehen kann, wobei die Greifmittel (2) drehgelenkig exzentrisch auf jedem Planetengetriebe (15) gelagert sind und einen Pfad (12) bestimmen, der einen Abschnitt (18) hat, welcher schräg und divergierend mit Bezug auf die Versorgungslinie (3) ist, wobei der Abschnitt (18) stromabwärts von dem Bereich zum Klemmen des Produkts (A) durch die Greifmittel (2) angeordnet ist.

6. Die Einstellungsanordnung gemäß Anspruch 5, **dadurch gekennzeichnet, dass** die Greifmittel (2) eine tragende Welle (19) für ihr erstes Ende (20) umfassen, das dazu dient, das Produkt (A) zu klemmen, wobei die Welle (19) beweglich ist zum Zwecke der gegenseitigen Annäherung und Entfernung der Enden (20) einander gegenüberliegender und ausgerichteter Mittel (2), mit daraus folgendem Klemmen und Lösen des Produkts (A).

7. Die Einstellungsanordnung gemäß Anspruch 6, **dadurch gekennzeichnet, dass** die Welle (19) an ihrem zweiten Ende (21), das dem ersten Ende (20) gegenüberliegt, mit dem mindestens einen Fühler (5, 6) gekoppelt ist, der entlang dem mindestens einen Nocken (7, 8) gleiten kann.

8. Die Einstellungsanordnung gemäß Anspruch 7, **dadurch gekennzeichnet, dass** die Fühler (5, 6) zwei an der Zahl und mit einer Leerlauf-Endrolle ausgestattet sind, die dazu bestimmt ist, an den Seitenrand eines entsprechenden konturierten Nockens (7, 8) abzustoßen, wobei jedes Paar von Fühlern (5, 6) mit einer Klammer (22) gekoppelt ist, welche mit einer entsprechenden Welle (19) eines entsprechenden Greifmittels (2) verknüpft ist.

## Revendications

1. Ensemble de réglage pour des machines de conditionnement et analogue, du type comportant des moyens de saisie (2) pour prendre une produit (A) à la fois à partir d'une ligne (3), pour mettre les produits (A) en file d'attente et pour les transférer vers une station de traitement (4) respective,
- lesdits moyens de saisie (2) étant rotatifs et sont fonctionnellement associée, pour leur orientation et pour l'orientation du produit (A) qu'ils maintiennent, à au moins une sonde (5, 6) respective qui peut glisser sur au moins une came profilée (7, 8) qui est sensiblement fixe, les translations de ladite au moins une sonde (5, 6) générant des rotations desdits moyens de saisie (2) avec une modification conséquente de l'orientation du produit (A) maintenu entre eux pour une livraison correcte à la station de traitement (4) suivante,
- ladite au moins une came (7, 8) étant solidaire d'un axe fixe (9), la tête (10) dudit axe (9) étant associée à un élément de déplacement (11) respectif pour la rotation commandée dudit axe (9) suivant au moins deux agencements différents, qui correspondent à différentes configurations de rotation desdites cames (7, 8), avec une variation conséquente différente de l'orientation du produit (A) le long du trajet (12), lorsque ledit produit (A) est retenu par lesdits moyens de saisie (2) après son serrage,
**caractérisé en ce que**
- lesdites cames (7, 8) sont mutuellement complémentaires, chaque came (7, 8) ayant un bord profilé qui définit, dans des secteurs contigus, différents trajets pour ladite au moins une sonde (5, 6), qui correspondent à différentes variations de l'orientation du produit (A) le long du trajet (12) après la saisie de chaque produit individuel (A) à partir de ladite ligne d'alimentation (3).

2. Ensemble de réglage selon la revendication 1, **caractérisé en ce que** lesdites cames (7, 8) comportent une pluralité de secteurs contigus ayant une étendue angulaire prédéfinie, lesdits secteurs étant pourvus d'un bord avec un contour qui est incurvé d'après une règle de mouvement prédéfinie, le déplacement de ladite sonde (5, 6) le long des bords respectifs de chaque secteur produisant une orientation différente du produit (A) lors de la livraison à ladite station de traitement (4).

3. Ensemble de réglage selon la revendication 1, **caractérisé en ce que** ledit élément de déplacement (11) comporte au moins une manette de préhension et au moins une unité de blocage (13) pour maintenir l'axe (9) en fonction d'une pluralité de configurations différentes, un opérateur, après désactivation de ladite unité de blocage (13), en agissant manuellement sur la manette de préhension en vue de la rotation dudit axe (9) d'un seul tenant avec ladite au moins une came (7, 8), pouvant agencer l'axe (9) en fonction de la configuration de rotation présentant un intérêt.

4. Ensemble de réglage selon la revendication 1 ou la revendication 3, **caractérisé en ce que** ledit élément de déplacement (11) comporte au moins un actionneur et au moins une unité de blocage (13), pour maintenir l'axe (9) en fonction d'une pluralité de configurations différentes, ledit actionneur et ladite unité (13) étant commandés par un dispositif de commande et de gestion respectif pour désactiver ladite unité de blocage (13), pour la rotation dudit axe (9) d'un seul tenant avec ladite au moins une came (7, 8) et pour la réactivation subséquente de ladite unité de blocage (13) lorsque la rotation est terminée.

5. Ensemble de réglage selon la revendication 1, **caractérisé en ce qu'**il comporte une paire de carrousels mutuellement opposés (14) qui sont coaxiaux et tournent de manière synchrone, chaque carrousel (14) supportant au moins deux moyens de saisie (2), qui sont répartis angulairement le long dudit carrousel (14) et sont alignés avec des moyens de saisie (2) correspondants de l'autre carrousel (14), lesdits moyens de saisie (2) étant articulés sur un engrenage planétaire denté (15) qui est reçu dans ledit carrousel (14) et peut tourner autour d'une roue solaire dentée fixe (16) dudit carrousel (14), lesdits moyens de saisie (2) pivotant de manière excentré sur chaque engrenage planétaire (15), en définissant un trajet (12) qui a une portion (18) qui est inclinés et divergente par rapport à ladite ligne d'alimentation (3), ladite portion (18) étant agencée en aval de la zone pour le serrage dudit produit (A) par lesdits moyens de saisie (2).

6. Ensemble de réglage selon la revendication 5, **caractérisé en ce que** lesdits moyens de saisie (2) comportent un arbre de support (19) pour leur première extrémité (20) qui est destinée à serrer le produit (A), ledit arbre (19) pouvant être déplacé en translation pour l'approche et l'espacement mutuels des extrémités (20) des moyens (2) mutuellement opposés et alignés, avec un serrage et une libération conséquents du produit (A).

7. Ensemble de réglage selon la revendication 6, **caractérisé en ce que** ledit arbre (19), au niveau de sa seconde extrémité (21), qui est opposée à ladite première extrémité (20), est couplé à la au moins une sonde (5, 6) qui peut glisser le long de ladite au moins une came (7, 8).

8. Ensemble de réglage selon la revendication 7, **caractérisé en ce que** lesdites sondes (5, 6) sont au nombre de deux et sont pourvues d'un galet d'extrémité libre qui est destiné à venir en butée contre la bord latéral d'une came profilée (7, 8) respective, chaque paire de sondes (5, 6) étant couplée à un support (22) qui est associé à un arbre (19) respectif de moyens de saisie (2) respectifs.
